# FASCICULE DE BREVET EUROPEEN

(11) **EP 2 525 484 B1**
(45) Date de publication et mention de la délivrance du brevet: **27.11.2013**
(21) Numéro de dépôt: 12168169.6
(22) Date de dépôt: 16.05.2012
(51) Int. Cl.: H02M 7/487

(54) **Onduleur de tension à 2n+1 niveaux**
Spannungsumrichter mit 2n+1 Spannungsstufen
voltage inverter with 2n+1 voltage levels

(30) Priorité: 17.05.2011 FR 1154283
(43) Date de publication de la demande: 21.11.2012
(73) Titulaire: GE Energy Power Conversion Technology Limited, Rugby Warwickshire CV21 1BU (GB)
(72) Inventeur: Soua, Samir, 92160 Antony (FR)
(74) Mandataire: Serjeants LLP

(56) Documents cités:
- US-B1- 6 278 626

## Description

La présente invention concerne un système de conversion d'une tension continue d'entrée en une tension alternative de sortie comportant au moins une phase, du type comprenant:
- deux bornes d'entrée,
- deux générateurs de tension connectés en série entre les bornes d'entrée et reliés entre eux par un point milieu,
   pour la ou chaque phase de la tension de sortie :
   + une borne de sortie,
   + deux branches de commutation connectées chacune entre la borne de sortie et une borne d'entrée respective, chaque branche de commutation comportant N premières cellules de commutation connectées en série et N-1 point(s) intermédiaire(s), les premières cellules de commutation étant successivement reliées entre elles par un point intermédiaire correspondant, N étant un nombre entier supérieur ou égal à 2, et
- des moyens de commande des premières cellules de commutation.

La présente invention concerne notamment les onduleurs de tension à 2N+1 niveaux, où N est un nombre entier de valeur supérieure ou égale à 2. De tels onduleurs de tension avec un nombre élevé de niveaux de tension de sortie présentent plusieurs avantages par rapport aux onduleurs de tension à deux ou trois niveaux, tels qu'une réduction de la distorsion harmonique de la tension alternative de sortie et une diminution des contraintes d'isolation au niveau du moteur électrique destiné à être alimenté par l'onduleur.

La présente invention s'applique en particulier aux systèmes de conversion présentant une puissance électrique élevée, telle qu'une puissance supérieure à 100kW.

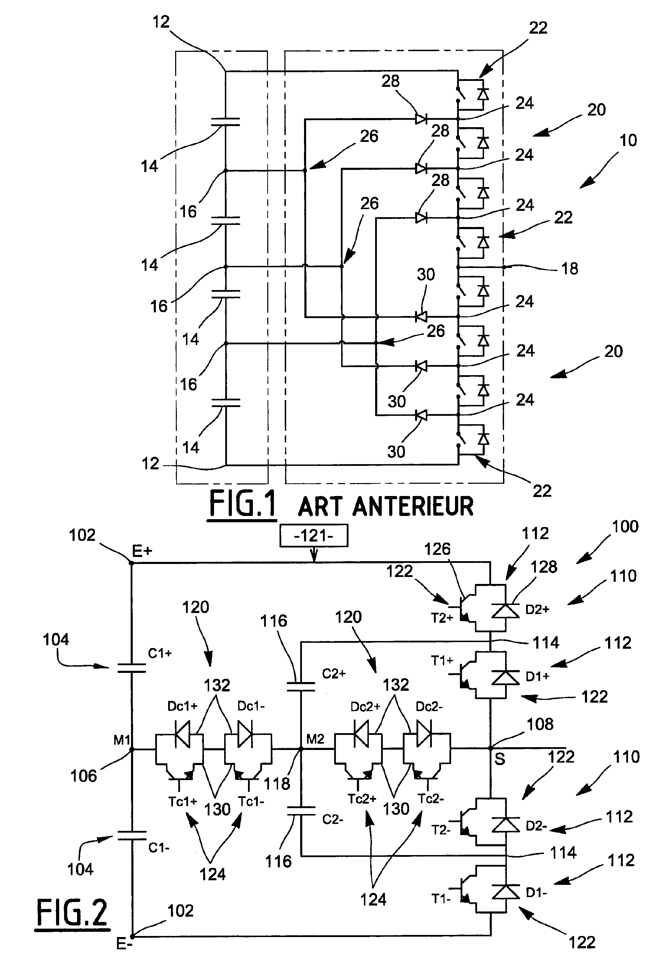

On connaît un système de conversion du type précité. La figure 1 illustre un tel système de conversion.

Sur la figure 1, le système de conversion 10 est un onduleur de tension à cinq niveaux de sortie, et comporte deux bornes d'entrée 12, quatre condensateurs 14 connectés en série entre les bornes d'entrée 12 et reliés entre eux deux par deux via un point milieu 16 respectif. Le système de conversion 10 comporte également, pour la ou chaque phase de la tension de sortie, une borne de sortie 18 et deux branches de commutation 20 connectées chacune entre la borne de sortie 18 et une borne d'entrée 12 respective. Chaque branche de commutation comporte quatre cellules de commutation 22 connectées en série et trois points intermédiaires 24, les cellules de commutation 22 étant successivement reliées entre elles par un point intermédiaire 24 correspondant.

Le système de conversion 10 comprend également trois branches intermédiaires 26 connectées chacune à un point milieu 16 respectif et comportant deux diodes 28, 30. La première diode 28 est connectée en direct entre ledit point milieu 16 respectif et un point intermédiaire correspondant d'une des deux branches de commutation 20, la seconde diode 30 étant connectée en inverse entre ledit point milieu 16 respectif et un point intermédiaire 24 de l'autre des deux branches de commutation 20. Le système de conversion 10 comprend également des moyens, non représentés, de commande des cellules de commutation 22.

Un tel système de conversion est susceptible de présenter des déséquilibres de charges électriques au niveau des points milieux 16, ce qui entraîne alors une dissymétrie de la tension et du courant en sortie du système de conversion. Le système de conversion comprend alors généralement des moyens d'équilibrage de la tension aux bornes de chacun des condensateurs, tels que des moyens d'équilibrage par ajout d'une composante homopolaire de mode commun sur chacune des phases du courant alternatif de sortie, le décalage entre les phases permettant de charger ou de décharger les condensateurs.

Toutefois, de tels moyens d'équilibrage sont efficaces lorsque l'amplitude de la tension alternative de sortie est inférieure à une valeur limite sensiblement égale au quart de la valeur de la tension continue d'entrée, et ne permettent pas un équilibrage correct lorsque l'amplitude du courant alternatif de sortie est supérieure à ladite valeur précitée. En outre, de tels moyens d'équilibrage entraînent un surcout.

Le but de l'invention est de proposer un système de conversion permettant de réduire le déséquilibre de tension en des points milieux quelle que soit la tension et le courant délivré par le système de conversion, tout en ne nécessitant pas de moyens additionnels d'équilibrage de la tension aux bornes des condensateurs.

A cet effet, l'invention a pour objet un système de conversion du type précité, **caractérisé en ce qu'**il comprend en outre, pour la ou chaque phase de la tension de sortie :
+ N-1 paire(s) de condensateurs, chaque paire de condensateurs étant connectée entre un point intermédiaire d'une des deux branches de commutation et un point intermédiaire de l'autre des deux branches de commutation, les deux condensateurs de chaque paire étant reliés entre eux par un point milieu,
+ N deuxièmes cellules de commutation, une parmi les N deuxièmes cellules étant connectée entre la borne de sortie et un point milieu, et chacune des N-1 autre(s) deuxième(s) cellule(s) étant connectée entre deux points milieux, et

- des moyens de commande des deuxièmes cellules de commutation.

Suivant d'autres modes de réalisation, le système de conversion comprend une ou plusieurs caractéristiques suivantes, prise(s) isolément ou suivant toutes les combinaisons techniquement possibles :
- les moyens de commande sont propres à commander la commutation des première(s) et deuxième(s) cellules correspondantes suivant une loi de commande, et la loi de commande est telle que le courant circule, pour au moins une valeur donnée de la tension alternative de sortie, à travers un condensateur correspondant dans un sens au cours d'une première phase, puis dans l'autre sens au cours d'une deuxième phase,
- chaque première cellule de commutation comporte au moins un premier interrupteur bidirectionnel en courant,
- les premiers interrupteurs des deux branches de commutation sont connectés en série et dans le même sens entre les deux bornes d'entrée,
- chaque premier interrupteur comporte un transistor et une diode connectée en anti-parallèle du transistor,
- chaque deuxième cellule de commutation est bidirectionnelle en courant et en tension,
- chaque deuxième cellule de commutation comporte au moins deux deuxièmes interrupteurs connectés en anti-série,
- chaque deuxième interrupteur comporte un transistor et une diode connectée en anti-parallèle du transistor,
- chaque deuxième cellule de commutation comporte deux deuxièmes interrupteurs connectés en anti-parallèle, et
- chaque deuxième interrupteur comporte au moins une diode, un transistor connecté en série de la diode et une autre diode connectée en anti-parallèle du transistor.

Ces caractéristiques et avantages de l'invention apparaîtront à la lecture de la description qui va suivre, donnée uniquement à titre d'exemple, et faite en référence aux dessins annexés sur lesquels :
- la figure 1 déjà décrite est un schéma électrique d'un système de conversion de type connu,
- la figure 2 est un schéma électrique d'un système de conversion selon un premier mode de réalisation,
- les figures 3 à 16 sont des schémas illustrant le fonctionnement du système de conversion de la figure 2, et
- la figure 17 est une vue analogue à celle de la figure 2 selon un deuxième mode de réalisation.

La présente invention a pour objet un système de conversion d'une tension continue d'entrée en une tension alternative de sortie comportant au moins une phase et présentant 2N+1 niveaux, où N est un nombre entier supérieur ou égal à 2. Le système de conversion est, par exemple, un onduleur de tension à 2N+1 niveaux. La tension alternative est, par exemple, périodique.

Le système de conversion est destiné à alimenter une charge avec une tension comportant au moins une phase et présentant une valeur élevée, par exemple supérieure 1000V. La charge présente une puissance électrique élevée, par exemple supérieure à 100kW. La charge est, par exemple, un moteur électrique triphasé.

La figure 2 représente un premier mode de réalisation du système de conversion tension 100 à 2N+1 niveaux, avec N égal à 2, soit cinq niveaux.

Le système de conversion 100 comprend deux bornes d'entrée 102, à savoir une borne positive notée E+ et une borne négative notée E-, et deux générateurs de tension 104 connectés en série entre les bornes d'entrée 102 et reliés entre eux par un point milieu 106, également noté M1.

Le système de conversion 100 comprend, pour la ou chaque phase de la tension de sortie, une seule phase étant représentée sur la figure 2, une borne de sortie 108, également notée S, et deux branches de commutation 110 connectées chacune entre la borne de sortie 108 et une borne d'entrée 102 respective. Chaque branche de commutation 110 comporte deux premières cellules de commutation 112 connectées en série et un point intermédiaire 114, les deux premières cellules 112 étant reliées entre elles par le point intermédiaire 114.

Le système de conversion 100 comprend en outre, pour la ou chaque phase de la tension de sortie, une paire de condensateurs 116, chaque paire de condensateurs 116 étant connectée entre un point intermédiaire 114 d'une des deux branches de commutation et un point intermédiaire 114 de l'autre des deux branches de commutation, les deux condensateurs 116 de la paire étant reliés entre eux par un point milieu 118, également noté M2.

Le système de conversion 100 comprend également, pour la ou chaque phase de la tension de sortie, deux deuxièmes cellules de commutation 120, une deuxième cellule 120 étant connectée entre la borne de sortie 108 et le point milieu 118, et l'autre deuxième cellule 120 étant connectée entre les points milieux 106, 118.

Le système de conversion 100 comprend des moyens 121 de commande des premières cellules de commutation 112 et des deuxièmes cellules de commutation 120.

Le système de conversion 100 est, par exemple, un onduleur triphasé, et comporte alors trois bornes de sortie 108, six branches de commutation 110, trois paires de condensateurs 116 et six deuxièmes cellules de commutation 120.

Les deux générateurs de tension 104 connectés entre les bornes d'entrée 102 sont identiques, et comportent, par exemple, chacun un condensateur. Les condensateurs des générateurs de tension 104 présentent une capacité de même valeur. Le condensateur connecté à la borne positive d'entrée est noté C1+, et le condensateur connecté à la borne négative d'entrée est noté C1-.

La branche de commutation 110 connectée à la borne positive d'entrée E+ sera appelée par la suite branche de commutation positive, et la branche de commutation 110 connectée à la borne négative d'entrée E- sera appelée par la suite branche de commutation négative.

Chaque première cellule de commutation 112 comporte au moins un premier interrupteur 122 bidirectionnel en courant. Dans l'exemple de réalisation de la figure 2, chaque première cellule de commutation 112 est constituée d'un premier interrupteur 122. En variante, chaque première cellule de commutation 112 comporte une pluralité de premiers interrupteurs 122 connectés en série les uns des autres.

Les deux condensateurs 116 de la paire de condensateurs connectés entre les points intermédiaires 114 sont identiques, et présentent donc une capacité de même valeur. Le condensateur 116 connecté au point intermédiaire 114 de la branche de commutation positive est noté C2+, le condensateur 116 connecté au point intermédiaire 114 de la branche de commutation négative est noté C2-.

Chaque deuxième cellule de commutation 120 est directionnelle en courant et en tension.

Chaque deuxième cellule de commutation 120 comporte au moins deux deuxièmes interrupteurs 124 connectés en anti-série, comme représenté sur la figure 2. Dans l'exemple de réalisation de la figure 2, chaque deuxième cellule de commutation 120 est constituée de deux deuxièmes interrupteurs 124 connectés en anti-série.

En variante, non représentée, chaque deuxième cellule de commutation 120 comporte deux deuxièmes interrupteurs connectés en anti-parallèle.

Les moyens de commande 121 sont propres à commander la commutation des première(s) et deuxième(s) cellules 112, 120 correspondantes suivant une loi de commande. La loi de commande est telle que le courant circule, pour au moins une valeur donnée de la tension alternative de sortie, à travers un condensateur correspondant 116 dans un sens au cours d'une première phase, puis dans l'autre sens au cours d'une deuxième phase, de sorte à équilibrer la tension aux bornes du condensateur 116. La loi de commande présente une fréquence de commutation des première(s) et deuxième(s) cellules 112, 120.

Les premiers interrupteurs 122 des deux branches de commutation sont connectés en série et dans le même sens entre les deux bornes d'entrée 102. Chaque premier interrupteur 122 comporte, par exemple, un transistor 126 et une diode 128 connectée en anti-parallèle du transistor 126. En variante, chaque premier interrupteur 122 comporte un thyristor et une diode, non représentés, la diode étant connectée en anti-parallèle du thyristor.

Chaque deuxième interrupteur 124 comporte, lorsque les deuxièmes interrupteurs sont connectés en anti-série au sein d'une deuxième cellule de commutation 120, un transistor 130 et une diode 132 connectée en anti-parallèle du transistor 130, comme représenté sur la figure 2. En variante, chaque deuxième interrupteur 124 comporte, lorsque les deuxièmes interrupteurs sont connectés en anti-série au sein d'une deuxième cellule de commutation 120, un thyristor et une diode, non représentés, la diode étant connectée en anti-parallèle du thyristor.

En variante, non représentée, chaque deuxième interrupteur comporte, lorsque les deuxièmes interrupteurs sont connectés en anti-parallèle au sein d'une deuxième cellule de commutation 120, au moins une diode, un transistor connecté en série de la diode et une autre diode connectée en anti-parallèle du transistor. En variante, chaque deuxième interrupteur 124 comporte, lorsque les deuxièmes interrupteurs sont connectés en anti-parallèle au sein d'une deuxième cellule de commutation 120, un thyristor et une diode, non représentés, la diode étant connectée en série du thyristor.

Les transistors 126 des premiers interrupteurs, et les transistors connectés en anti-série ou en anti-parallèle des deuxièmes interrupteurs 124 sont, par exemple, des transistors IGBT (de l'anglais Insulated Gate Bipolar Transistor). En variante, lesdits transistors sont des transistors IEGT (de l'anglais Injection Enhanced Gate Transistor).

En variante, les thyristors des premiers et deuxièmes interrupteurs 122, 124 sont des thyristors GTO (de l'anglais Gate Turn-Off) ou des thyristors GCT (de l'anglais Gate Controlled Thyristor).

Les transistors 126 de la branche de commutation positive sont respectivement notés T1+, T2+, et les transistors 126 de la branche de commutation négative sont respectivement notés T1-, T2-.

Les diodes 128 connectées en anti-parallèle des transistors T1+, respectivement T2+, sont notées D1+, respectivement D2+. Par analogie, les diodes 128 connectées en anti-parallèle des transistors T1-, respectivement T2-, sont notées D1-, respectivement D2-.

Les transistors 130 sont identiques. Les transistors 130 d'une même deuxième cellule de commutation 120 sont commandés simultanément par les moyens de commande 121.

Les transistors 130 de la deuxième cellule de commutation connectée entre les points milieux 106, 118 sont connectés en anti-série, et respectivement notés Tc1+ et Tc1-. Les transistors 130 de la deuxième cellule de commutation connectée entre le point milieu 118 et la borne de sortie 108 sont également connectés en anti-série, et respectivement notés Tc2+, Tc2-.

Les diodes 132 connectées en anti-parallèle des transistors Tc1+, respectivement Tc1-, sont notées Dc1+, respectivement Dc1-. Par analogie, les diodes 132 connectées en anti-parallèle des transistors notés Tc2+, respectivement Tc2-, sont notées Dc2+, respectivement Dc2-.

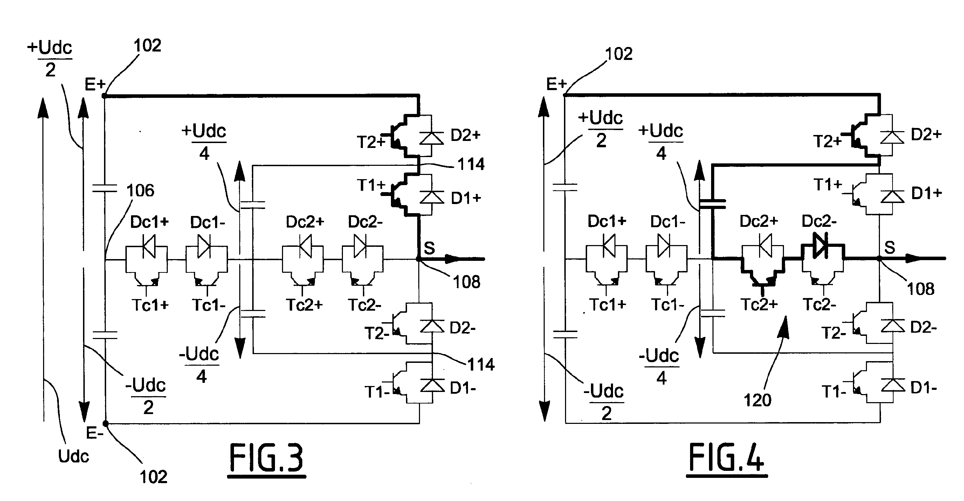

Le fonctionnement du système de conversion selon l'invention va désormais être expliqué à l'aide des figures 3 à 16.

Le système de conversion 100 est bidirectionnel. Autrement dit, le courant électrique est propre à circuler depuis les bornes d'entrée 102 vers la ou les bornes de sortie 108, le système de conversion 100 fonctionnant alors en onduleur, et inversement le courant est également propre à circuler depuis la ou les bornes de sortie 108 vers les bornes d'entrée 102, le système de conversion 100 fonctionnant alors en redresseur.

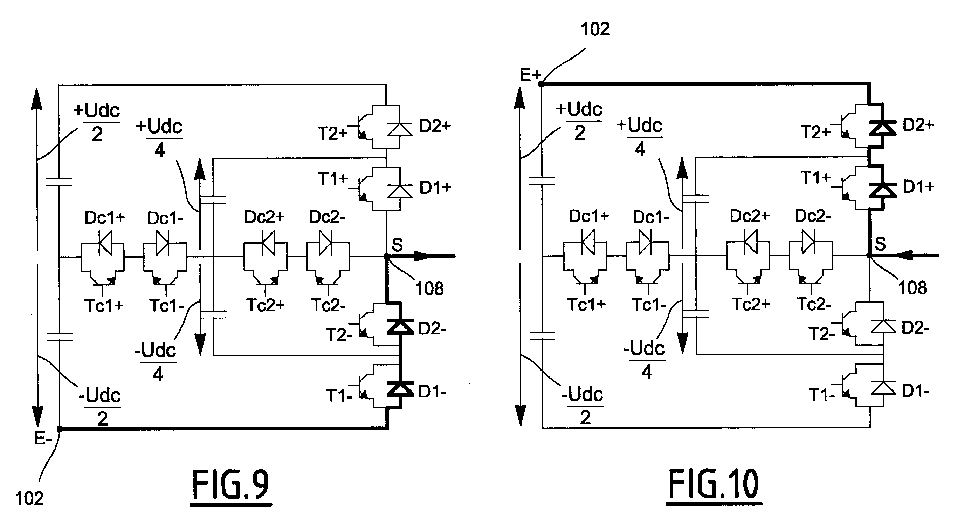

Les figures 3 à 16 illustrent la séquence de conduction des transistors et des diodes des premiers interrupteurs 122 et des deuxièmes interrupteurs 124 du système de conversion 100 à cinq niveaux. Plus précisément, les figures 3 à 9 illustrent la séquence de conduction lorsque le courant à travers la borne de sortie 108 est positif, c'est-à-dire lorsqu'il circule depuis une borne d'entrée 102 respective vers la borne de sortie 108. De manière complémentaire, les figures 10 à 16 illustrent la séquence de conduction lorsque le courant à travers la borne de sortie 108 est négatif, c'est-à-dire lorsqu'il circule depuis la borne de sortie 108 vers la borne d'entrée 102 respective.

Sur les figures 3 à 16, le chemin suivi par le courant électrique est représenté par les traits en gras.

La tension continue entre les bornes d'entrée 102 est notée Udc, comme représenté sur la figure 3. La tension entre le point milieu 106 et la borne positive d'entrée E+ est alors égale à +Udc/2, et la tension entre le point milieu 106 et la borne négative d'entrée E- est alors égale à -Udc/2.

Les condensateurs 116 sont initialement chargés à une tension égale à Udc/4. Autrement dit, la tension entre le point milieu 118 et le point intermédiaire 114 de la branche de commutation positive est initialement égale à +Udc/4, et la tension entre le point milieu 118 et le point intermédiaire 114 de la branche de commutation négative est initialement égale à -Udc/4.

Les états de commutation du système de conversion 100 lorsque celui-ci fonctionne en onduleur et que le courant circule depuis une borne d'entrée 102 respective ou le point milieu 106 vers la borne de sortie 108, vont être à présent décrit à l'aide des figures 3 à 9.

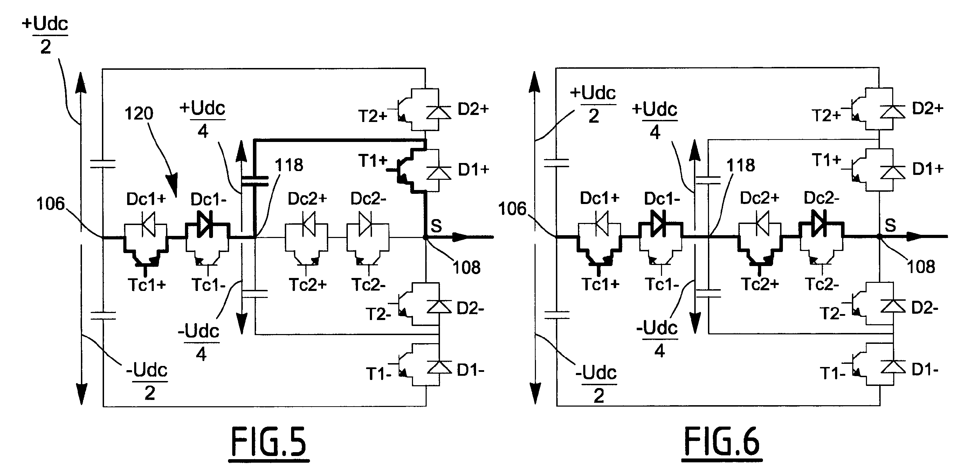

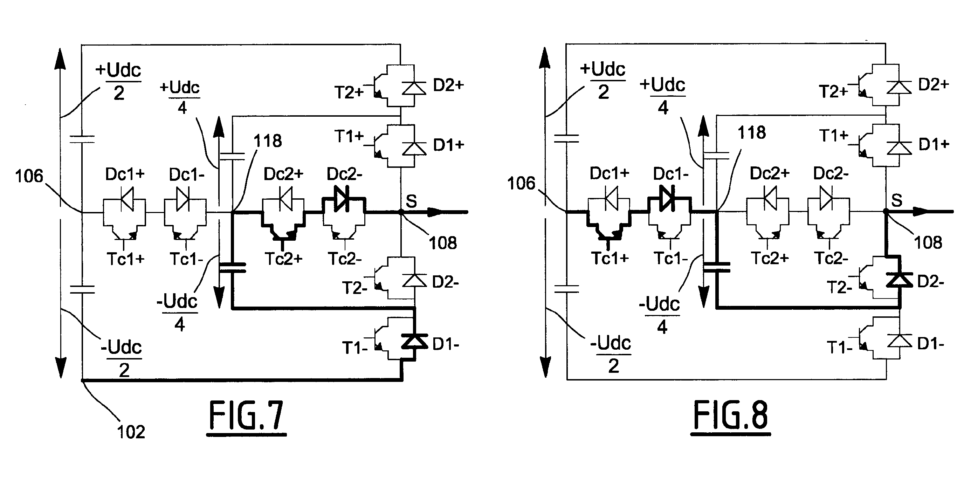

Les figures 3 à 9 illustrent des états successifs pour lesquels la tension délivrée en sortie du système de conversion varie, au cours d'une première demi-période, de +Udc/2 jusqu'à -Udc/2, par pas de Udc/4, avec les figures 4 et 5 correspondant à une même tension de sortie égale à +Udc/4 et les figures 7 et 8 correspondant à une même tension de sortie égale à -Udc/4 selon que le courant circule dans l'une ou l'autre des deuxièmes cellules de commutation 120. L'homme du métier comprendra que la variation de la tension de sortie au cours de la seconde demi-période est obtenue par symétrie, la tension variant de -Udc/2 jusqu'à +Udc/2, par pas de Udc/4.

Sur la figure 3, le courant circule depuis la borne positive d'entrée E+ à travers les transistors T1+ et T2+ jusqu'à la borne de sortie S, et la tension délivrée est alors égale à +Udc/2.

Sur la figure 4, le courant circule depuis la borne positive d'entrée E+ vers la borne de sortie 108 à travers le transistor T2+, le condensateur C2+ et la deuxième cellule de commutation 120 connectée entre le point milieu 118 et la borne de sortie 108, via le transistor Tc2+ et la diode Dc2- de la deuxième cellule, et la tension de sortie est alors égale à +Udc/4.

Sur la figure 5, la tension de sortie délivrée est également égale à +Udc/4, mais le courant circule dans ce cas depuis le point milieu 106 vers la borne de sortie 108 à travers le transistor Tc1+, la diode Dc1-, le condensateur C2+ et le transistor T1+.

Les états des figures 4 et 5 sont donc redondants concernant la valeur de la tension de sortie. L'état de la figure 4 correspond à un courant positif à travers le condensateur C2+, et l'état de la figure 5 correspond à un courant négatif à travers le condensateur C2+.

Autrement dit, la loi de commande est telle que le courant circule, pour la valeur donnée +Udc/4 de la tension alternative de sortie, à travers le condensateur C2+ dans un sens au cours d'une première phase représentée sur la figure 4, puis dans l'autre sens au cours d'une deuxième phase représentée sur la figure 5.

Ainsi, le courant moyen à travers le condensateur C2+ est nul sur une période d'équilibrage , ce qui permet de réduire les déséquilibres de charge aux bornes de ce condensateur C2+ et d'avoir une tension moyenne aux bornes du condensateur C2+ sensiblement égale à +Udc/4 entre le point milieu 118 et le point intermédiaire 114 de la branche de commutation positive.

La période d'équilibrage est, par exemple, la période de la tension alternative. En variante, la période d'équilibrage est la demi-période de la tension alternative. En variante encore, la période d'équilibrage est la période de commutation, c'est-à-dire l'inverse de la fréquence de commutation de la loi de commande.

Sur la figure 6, la tension de sortie délivrée est nulle, le courant circulant depuis le point milieu 106 vers la borne de sortie 108 à travers le transistor Tc1+, la diode Dc1-, le transistor Tc2+ et la diode Dc2-. Autrement dit, le courant circule depuis le point milieu 106 au potentiel nul à travers les deux deuxièmes cellules de commutation 120 et sans passer par un condensateur 116 de sorte que la tension est nulle.

Sur la figure 7, le courant circule depuis la borne négative d'entrée vers la borne de sortie 108 à travers la diode D1-, le condensateur C2-, et le transistor Tc2+ et la diode Dc2- de la deuxième cellule de commutation 120 connectée entre le point milieu 118 et la borne de sortie 108. La tension délivrée est alors égale à -Udc/4.

Sur la figure 8, la tension délivrée est également égale à -Udc/4, mais le courant circule à travers un chemin différent, depuis le point milieu 106 vers la borne de sortie 108 à travers le transistor Tc1+ et la diode Dc1- de la deuxième cellule de commutation 120 connectée entre les points milieux 106, 118, le condensateur C2- et la diode D2-.

Les états des figures 7 et 8 sont également redondants concernant la valeur de la tension de sortie. La différence entre ces deux états est liée au sens de circulation du courant dans le condensateur C2-, le courant à travers le condensateur C2- étant positif dans l'état de la figure 7 et négatif dans celui de la figure 8. Cette redondance présente également l'avantage d'avoir un courant moyen nul à travers le condensateur C2- sur la période d'équilibrage, et d'avoir une tension moyenne aux bornes du condensateur C2-sensiblement égale à -Udc/4 entre le point milieu 118 et le point intermédiaire 114 de la branche de commutation négative.

Autrement dit, la loi de commande est telle que le courant circule, pour la valeur donnée -Udc/4 de la tension alternative de sortie, à travers le condensateur C2- dans un sens au cours d'une première phase représentée sur la figure 7, puis dans l'autre sens au cours d'une deuxième phase représentée sur la figure 8.

La figure 9 correspond au dernier état de commutation lorsque le système de conversion 100 fonctionne en onduleur et que le courant circule depuis une borne d'entrée E+, E- ou le point milieu 106 vers la borne de sortie S. Sur la figure 9, le courant circule depuis la borne négative d'entrée E- jusque vers la borne de sortie S à travers les diodes D1- et D2-, et la tension de sortie est alors égale à -Udc/2.

Les états de commutation du système de conversion 100 lorsque celui-ci fonctionne en redresseur et que le courant circule depuis la borne de sortie 108 vers les bornes d'entrée 102 ou le point milieu 106, vont être à présent décrit à l'aide des figures 10 à 16.

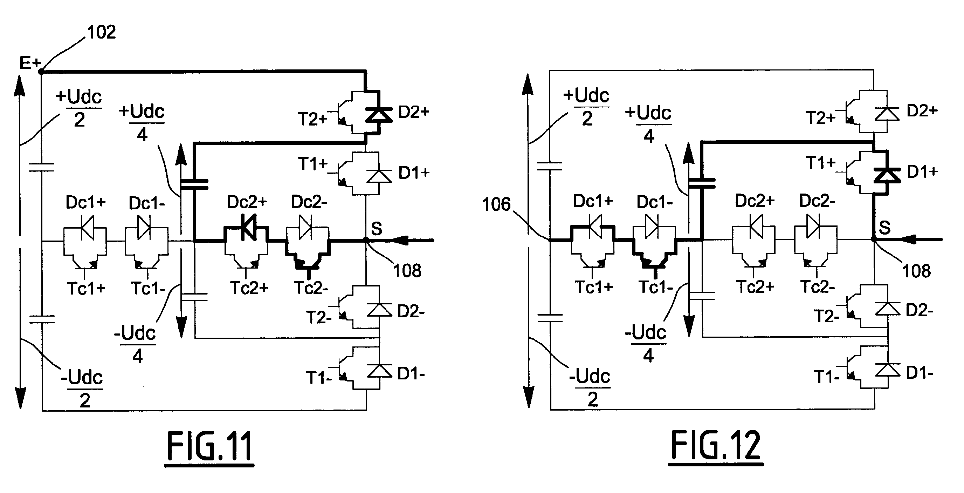

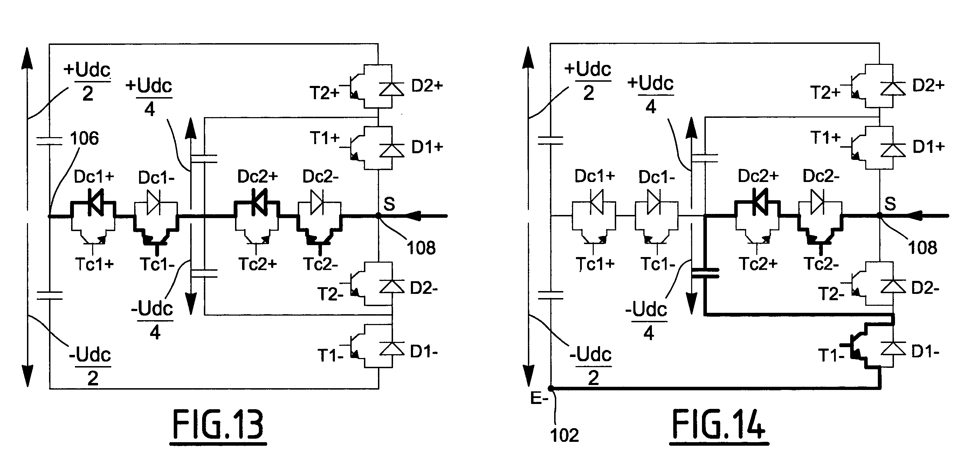

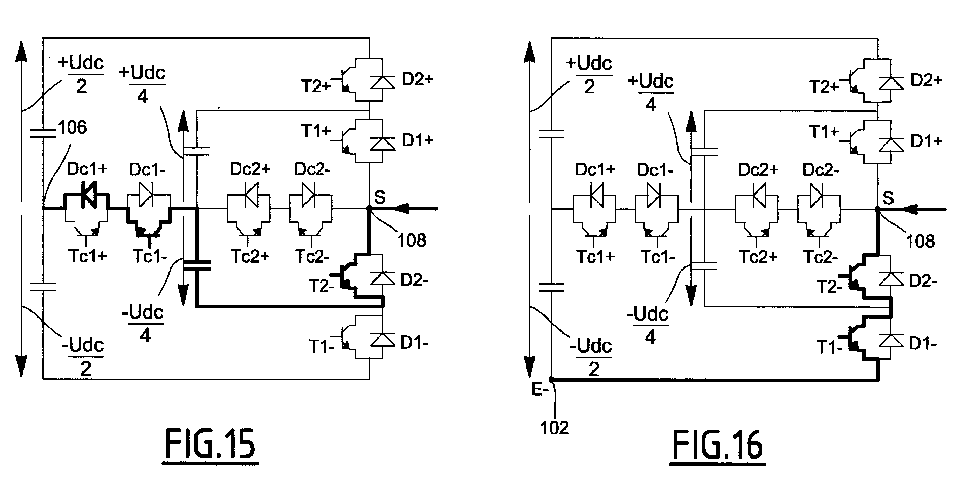

Les figures 10 à 16 illustrent les états successifs pour lesquels la tension alternative varie, au cours d'une première demi-période, de +Udc/2 jusqu'à -Udc/2, par pas de Udc/4, avec les figures 11 et 12 correspondant à une même tension alternative égale à +Udc/4 et les figures 14 et 15 correspondant à une même tension alternative égale à -Udc/4 selon que le courant circule dans l'une ou l'autre des deuxièmes cellules de commutation 120. L'homme du métier comprendra que la variation de la tension de sortie au cours de la seconde demi-période est obtenue par symétrie, la tension variant de -Udc/2 jusqu'à +Udc/2, par pas de Udc/4.

Sur la figure 10, le courant à travers la borne de sortie 108 est négatif et circule depuis ladite borne 108 vers la borne positive d'entrée E+ à travers les diodes D1+ et D2+. La tension est alors égale à +Udc/2.

Sur la figure 11, le courant circule depuis la borne de sortie 108 vers la borne positive d'entrée E+ à travers la deuxième cellule de commutation 120 connectée entre le point milieu 118 et la borne de sortie 108 via le transistor Tc2- et la diode Dc2+, puis à travers le condensateur C2+ et la diode D2+. La tension est alors égale à +Udc/4.

Sur la figure 12, la tension est également égale à +Udc/4, mais le courant circule suivant un chemin différent, à savoir à travers la diode D1+, le condensateur C2+ et la deuxième cellule de commutation 120 connectée entre les points milieux 106, 118, via les transistors Tc1- et la diode Dc1+.

L'état de la figure 12 est donc redondant de celui de la figure 11 concernant la valeur de la tension, et la différence entre les deux états correspond au sens de la circulation du courant à travers le condensateur C2+, le courant à travers le condensateur C2+ étant positif dans l'état de la figure 11 et négatif dans celui de la figure 12.

Autrement dit, la loi de commande est telle que le courant circule, pour la valeur donnée +Udc/4 de la tension alternative, à travers le condensateur C2+ dans un sens au cours d'une première phase représentée sur la figure 11, puis dans l'autre sens au cours d'une deuxième phase représentée sur la figure 12.

Sur la figure 13, le courant circule depuis la borne de sortie 108 vers le point milieu 106 au potentiel nul à travers les deux deuxièmes cellules de commutation 120, de sorte que la tension est nulle. Plus précisément, le courant circule à travers le transistor Tc2- et la diode Dc2+, puis à travers le transistor Tc1- et la diode Dc1+.

Sur la figure 14, le courant circule depuis la borne de sortie 108 vers la borne négative d'entrée E- à travers la deuxième cellule de commutation 120 connectée entre le point milieu 118 et la borne de sortie 108, via le transistor Tc2- et la diode Dc2+, puis à travers le condensateur C2- et le transistor T1-. La tension est égale à -Udc/4.

Sur la figure 15, la tension est également égale à -Udc/4 mais le chemin suivi par le courant est différent, celui-ci circulant à travers le transistor T2-, le condensateur C2- et la deuxième cellule de commutation 120 connectée entre les points milieux 106, 118, via le transistor Tc1- et la diode Dc1+, depuis la borne de sortie 108 vers le point milieu 106.

L'état de la figure 15 est également redondant de celui de la figure 14, et la différence entre les deux états correspond au sens de circulation du courant à travers le condensateur C2-, le courant circulant dans le condensateur C2- étant positif dans l'état de la figure 14 et négatif dans celui de la figure 15.

Autrement dit, la loi de commande est telle que le courant circule, pour la valeur donnée -Udc/4 de la tension alternative, à travers le condensateur C2- dans un sens au cours d'une première phase représentée sur la figure 14, puis dans l'autre sens au cours d'une deuxième phase représentée sur la figure 15.

Sur la figure 16, le courant circule enfin depuis la borne 108 vers la borne négative d'entrée E- à travers les transistors T2- et T1-, de sorte que la tension alternative est égale à -Udc/2.

L'homme du métier comprendra que le fonctionnement du système de conversion est analogue lorsque les premiers et deuxièmes interrupteurs 122, 124 comprennent des thyristors.

Le système bidirectionnel de conversion 100 selon l'invention permet ainsi de délivrer une tension avec cinq niveaux dans l'exemple de réalisation des figures 2 à 16, où les valeurs prises par la tension alternative sont égales à +Udc/2, +Udc/4, 0, -Udc/4, ou -Udc/2, la tension continue étant égale à Udc.

Le système de conversion selon l'invention permet de réduire les déséquilibres de charges au niveau du point milieu 118, de par les redondances d'états pour les tensions +Udc/4 et -Udc/4 permettant d'avoir un courant moyen nul à travers les condensateurs C2+ et C2- sur la période d'équilibrage. Le système de conversion permet également d'avoir une tension moyenne aux bornes du condensateur C2+ sensiblement égale à +Udc/4 entre le point milieu 118 et le point intermédiaire 114 de la branche de commutation positive, et une tension moyenne aux bornes du condensateur C2-sensiblement égale à -Udc/4 entre le point milieu 118 et le point intermédiaire 114 de la branche de commutation négative .

Dans l'exemple de réalisation décrit précédemment à l'aide des figures 3 à 16, la loi de commande est telle que les redondances d'états pour les tensions +Udc/4 et -Udc/4 se produisent au cours de chaque demi-période de la tension alternative. Autrement dit, la période d'équilibrage est la demi-période de la tension alternative.

En variante, la loi de commande est telle que les redondances d'états pour les tensions +Udc/4 et -Udc/4 se produisent au cours de la période de la tension alternative, un premier état étant mis en oeuvre au cours de la première demi-période, et l'état redondant correspondant étant mis en oeuvre au cours de la seconde demi-période. Autrement dit, la période d'équilibrage est la période de la tension alternative.

L'homme du métier comprendra en outre que le système de conversion dans lequel chaque première cellule de commutation 112 comporte une pluralité de premiers interrupteurs 122 permet de délivrer une tension de sortie de valeur plus importante.

En variante, avec une tension de sortie de valeur inchangée, le système de conversion dans lequel chaque première cellule de commutation 112 comporte une pluralité de premiers interrupteurs 122 permet d'utiliser des composants, à savoir des transistors et des diodes, présentant une tension d'utilisation plus faible. De tels composants à plus faible tension d'utilisation sont moins coûteux.

Les deuxièmes cellules de commutation 120 ne comportent pas de bobine électromagnétique. Autrement dit aucune bobine électromagnétique n'est connectée entre les points milieux M1 et M2 ou entre le point milieu M2 et la borne de sortie 108.

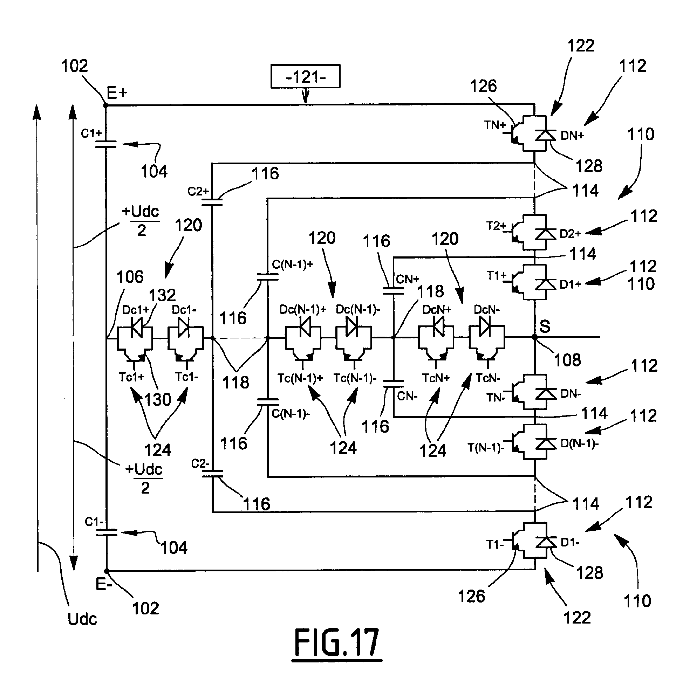

La figure 17 illustre un deuxième mode de réalisation de l'invention pour lequel les éléments analogues au premier mode de réalisation, décrit précédemment, sont repérés par des références identiques, et ne sont pas décrits à nouveau.

Selon le deuxième mode de réalisation, le système de conversion 100 présente 2N+1 niveaux, où N est un nombre entier supérieur ou égal à 2. Le système de conversion 100 est, par exemple, un onduleur de tension à 2N+1 niveaux. Autrement dit, le deuxième mode de réalisation est une généralisation du premier mode de réalisation pour lequel N était égal à 2.

Sur la figure 17, le système de conversion 100 comprend deux bornes d'entrée 102, à sa voir une borne positive E+ et une borne négative E-, et deux générateurs de tension 104 connectés en série entre les bornes d'entrée 102 et reliés entre eux par un point milieu 106.

Le système de conversion 100 comprend, pour la ou chaque phase de la tension de sortie, une borne de sortie 108 et deux branches de commutation 110 connectées chacune entre la borne de sortie 108 et une borne d'entrée 102 respective. Chaque branche de commutation 110 comporte N premières cellules de commutation 112 connectée en série et N-1 points intermédiaires 114, les premières cellules de commutation 112 étant successivement reliées entre elles par un point intermédiaire 114 correspondant.

Le système de conversion 100 comprend également, pour la ou chaque phase de la tension de sortie, N-1 paire(s) de condensateurs 116, chaque paire de condensateurs 116 étant connectée entre un point intermédiaire 114 d'une des deux branches de commutation 110 et un point intermédiaire 114 de l'autre des deux branches de commutation 110, et les deux condensateurs 116 de chaque paire étant reliés entre eux par un point milieu 118.

Le système de conversion 100 comprend également, pour la ou chaque phase de la tension de sortie, N deuxièmes cellules de commutation 120, une parmi les N deuxièmes cellules 120 étant connectée entre la borne de sortie 108 et un point milieu 118, et chacune des N-1 autre(s) deuxième(s) cellule(s) 120 étant connectée(s) entre deux points milieux 106, 118.

Le système de conversion 100 comprend des moyens 121 de commande des premières et deuxièmes cellules de commutation 112, 120.

Chaque première cellule de commutation 112 comporte au moins un premier interrupteur bidirectionnel 122. En variante, chaque première cellule de commutation 112 comporte une pluralité de premiers interrupteurs 122.

Chaque deuxième cellule de commutation 120 est bidirectionnelle en courant et en tension.

Chaque deuxième cellule de commutation 120 comporte au moins deux deuxièmes interrupteurs 124 connectés en anti-série, comme représenté sur la figure 17. Dans l'exemple de réalisation de la figure 17, chaque deuxième cellule de commutation 120 est constituée de deux deuxièmes interrupteurs 124 connectés en anti-série. En variante, non représentée, chaque deuxième cellule de commutation 120 comporte une pluralité de paires de deuxièmes interrupteurs 124 connectés en anti-série.

En variante, non représentée, chaque deuxième cellule de commutation 120 comporte deux deuxièmes interrupteurs connectés en anti-parallèle.

Les moyens de commande 121 sont propres à commander la commutation des première(s) et deuxième(s) cellules 112, 120 correspondantes suivant une loi de commande. La loi de commande est telle que le courant circule, pour au moins une valeur donnée de la tension alternative de sortie, à travers un condensateur correspondant 116 dans un sens au cours d'une première phase, puis dans l'autre sens au cours d'une deuxième phase. La loi de commande présente une fréquence de commutation des première(s) et deuxième(s) cellules 112, 120.

Ainsi, le courant moyen à travers le condensateur 116 correspondant est nul sur une période d'équilibrage, ce qui permet de réduire les déséquilibres de charge aux bornes du condensateur 116 correspondant et d'avoir une tension moyenne aux bornes du condensateur 116 correspondant sensiblement égale à Udc/4 en valeur absolue.

La loi de commande est, par exemple, telle que la première phase et la deuxième phase sont comprises dans chaque demi-période de la tension alternative, celle-ci étant périodique. Autrement dit, la période d'équilibrage est la demi-période de la tension alternative.

En variante, la loi de commande est telle que la première phase est comprise dans la première demi-période de la tension alternative, et la deuxième phase est comprise dans la seconde demi-période. Autrement dit, la période d'équilibrage est la période de la tension alternative.

En variante encore, la période d'équilibrage est la période de commutation, c'est-à-dire l'inverse de la fréquence de commutation de la loi de commande.

Chaque premier interrupteur 122 comporte un transistor 126 et une diode 128 connectée en anti-parallèle du transistor 126. Les transistors 126 sont notés Ti+ et les diodes correspondantes 128 sont notées Di+, l'indice i variant entre 1 et N dans l'exemple de réalisation de la figure 17 où chaque première cellule de commutation 112 est constituée d'un premier interrupteur bidirectionnel 122. En variante, chaque premier interrupteur 122 comporte un thyristor et une diode, non représentés, la diode étant connectée en anti-parallèle du thyristor.

Chaque deuxième interrupteur 124 comporte un transistor 130 et une diode 132 connectée en anti-parallèle du transistor 130 lorsque les deuxièmes interrupteurs 124 de chaque cellule de commutation 120 sont connectés en anti-série. Les deux transistors 130 de chaque deuxième cellule de commutation sont alors connectés en anti-série et notés Tci+, Tci-, l'indice i variant entre 1 et N dans l'exemple de réalisation de la figure 17 où chaque deuxième cellule de commutation 120 est constituée de deux deuxièmes interrupteurs 124 connectés en anti-série. Par analogie, les diodes 132 sont notées Dci+, Dci-, l'indice i variant également entre 1 et N. En variante, chaque deuxième interrupteur 124 comporte, lorsque les deuxièmes interrupteurs sont connectés en anti-série au sein d'une deuxième cellule de commutation 120, un thyristor et une diode, non représentés, la diode étant connectée en anti-parallèle du thyristor.

En variante, non représentée, chaque deuxième interrupteur comporte au moins une diode, un transistor connecté en série de la diode et une autre diode connectée en anti-parallèle du transistor, non représentés, lorsque les deuxièmes interrupteurs de chaque deuxième cellule de commutation sont connectés en anti-parallèle. En variante, chaque deuxième interrupteur 124 comporte, lorsque les deuxièmes interrupteurs sont connectés en anti-parallèle au sein d'une deuxième cellule de commutation 120, un thyristor et une diode, non représentés, la diode étant connectée en série du thyristor.

Lors du fonctionnement du système de conversion 100 selon le deuxième mode de réalisation, la tension continue entre les bornes d'entrée 102 est égale à Udc, et la tension aux bornes du condensateur C1+ entre le point milieu 106 et la borne positive d'entrée E+ est alors égale à +Udc/2, la tension aux bornes du condensateur C1- entre le point milieu 106 et la borne négative d'entrée E- étant égale à -Udc/2.

La tension aux bornes des condensateurs 116 notés Ci+, respectivement Ci-, avec i compris entre 2 et N, est égale à +(N+1-i)xUdc/2N, respectivement égale à -(N+1-i)xUdc/2N. La tension aux bornes des condensateurs 116 de la dernière paire de condensateurs notés CN+, respectivement CN-, est alors égale à +Udc/2N, respectivement à -Udc/2N, i étant égal à N.

Le fonctionnement de ce deuxième mode de réalisation présente des redondances d'états avec le courant circulant, pour une même valeur de la tension alternative, dans un sens, puis dans l'autre, à travers chacun des condensateurs 116 notés Ci+, respectivement Ci-, des N-1 paire(s) de condensateurs, i étant compris entre 2 et N.

Plus précisément, la loi de commande est telle que le courant circule, pour la valeur donnée +(N+1-i)xUdc/2N, respectivement -(N+1-i)xUdc/2N, de la tension alternative, à travers le condensateur Ci+, respectivement Ci-, dans un sens au cours d'une première phase, puis dans l'autre sens au cours d'une deuxième phase, i variant entre 2 et N, et N étant un nombre entier supérieur ou égal à 2.

Le fonctionnement de ce deuxième mode de réalisation est par ailleurs analogue à celui du premier mode de réalisation, et n'est donc pas décrit à nouveau.

Le courant moyen à travers chacun des condensateurs 116 des N-1 paire(s) de condensateurs est nul sur la période d'équilibrage de par les redondances d'états. La tension moyenne aux bornes de chacun des condensateurs 116 de la i^{eme} paire de condensateurs est sensiblement égale à (N+1-i)xUdc/2N en valeur absolue, i étant compris entre 2 et N.

Les autres avantages de ce deuxième mode de réalisation sont analogues du premier mode de réalisation, et ne sont donc pas décrits à nouveau.

Les deuxièmes cellules de commutation 120 ne comportent pas de bobine électromagnétique. Autrement dit aucune bobine électromagnétique n'est connectée entre les points milieux 116, 118 ou entre le point milieu 118 et la borne de sortie 108.

On conçoit ainsi que le système de conversion 100 selon l'invention permet de réduire le déséquilibre de tension en des points milieux quelle que soit la tension et le courant délivré par le système de conversion, tout en ne nécessitant pas de moyens additionnels d'équilibrage de la tension aux bornes des condensateurs.

## Revendications

1. Système (100) de conversion d'une tension continue d'entrée en une tension alternative de sortie comportant au moins une phase, du type comprenant :
- deux bornes d'entrée (102),
- deux générateurs de tension. (104) connectés en série entre les bornes d'entrée (102) et reliés entre eux par un premier point milieu (106),
pour la ou chaque phase de la tension de sortie :
+ une borne de sortie (108),
+ deux branches de commutation (110) connectées chacune entre la borne de sortie (108) et une borne d'entrée (102) respective, chaque branche de commutation (110) comportant N premières cellules de commutation (112) connectées en série et N-1 point(s) intermédiaire(s) (114), les premières cellules de commutation (112) étant successivement reliées entre elles par un point intermédiaire (114) correspondant, N étant un nombre entier supérieur ou égal à 2,
- des moyens (121) de commande des premières cellules de commutation (112), **caractérisé en ce qu'**il comprend en outre :
pour la ou chaque phase de la tension de sortie :
+ N-1 paire(s) de condensateurs (116), chaque paire de condensateurs (116) étant connectée entre un point intermédiaire (114) d'une des deux branches de commutation (110) et un point intermédiaire (114) de l'autre des deux branches de commutation (110), les deux condensateurs (116) de chaque paire étant reliés entre eux par des seconds points milieus (118),
+ N deuxièmes cellules de commutation (120), une parmi les N deuxièmes cellules (120) étant connectée entre la borne de sortie (108) et un premier second point milieu (118), et chacune des N-1 autre(s) deuxième(s) cellule(s) (120) étant connectée entre deux points milieux (118, 106), et
- des moyens (121) de commande des deuxièmes cellules de commutation (120), et **en ce que** les moyens de commande (121) sont propres à commander la commutation des première(s) et deuxième(s) cellules (112, 120) correspondantes suivant une loi de commande, et dans lequel la loi de commande est telle que le courant circule, pour au moins une valeur donnée parmi +Udc/4 et -Udc/4 de la tension alternative de sortie, à travers un condensateur correspondant (116) dans un sens au cours d'une première phase, puis dans l'autre sens au cours d'une deuxième phase.

2. Système (100) selon la revendication 1, dans lequel chaque première cellule de commutation (112) comporte au moins un premier interrupteur (122) bidirectionnel en courant.

3. Système (100) selon la revendication 2, dans lequel les premiers interrupteurs (122) des deux branches de commutation (110) sont connectés en série et dans le même sens entre les deux bornes d'entrée (102).

4. Système (100) selon la revendication 2 ou 3, dans lequel chaque premier interrupteur comporte un transistor (126) et une diode (128) connectée en anti-parallèle du transistor (126).

5. Système (100) selon l'une quelconque des revendications précédentes, dans lequel chaque deuxième cellule de commutation (120) est bidirectionnelle en courant et en tension.

6. Système (100) selon la revendication 5, dans lequel chaque deuxième cellule de commutation (120) comporte au moins deux deuxièmes interrupteurs (124) connectés en anti-série.

7. Système (100) selon la revendication 6, dans lequel chaque deuxième interrupteur (124) comporte un transistor (130) et une diode (132) connectée en anti-parallèle du transistor (130).

8. Système (100) selon la revendication 5, dans lequel chaque deuxième cellule de commutation (120) comporte deux deuxièmes interrupteurs connectés en antiparallèle.

9. Système (100) selon la revendication 8, dans lequel chaque deuxième interrupteur comporte au moins une diode, un transistor connecté en série de la diode et une autre diode connectée en anti-parallèle du transistor.

## Patentansprüche

1. System zur Wandlung einer Eingangsgleichspannung in eine Ausgangswechselspannung mit wenigstens einer Phase, aufweisend:
- zwei Eingangsanschlüsse (102),
- zwei Spannungsquellen (104) die zwischen den Eingangsschlüssen (102) in Reihe geschaltet sind und miteinander über einen ersten Mittelpunkt (106) verbunden sind,
für die oder jede Phase der Ausgangsspannung:
- einen Ausgangsanschluss (108),
- zwei Schaltzweige (110), die jeweils zwischen einen der Eingangsanschlüsse (102) und den Ausgangsanschluss (108) geschaltet sind, wobei jeder Schaltzweig (110) N erste in Reihe geschaltete Schaltzellen (112) und N-1 Zwischenpunkte (114) aufweist, wobei die ersten Schaltzellen (112) sukzessiv über einen entsprechenden Zwischenpunkt (114) miteinander verbunden sind, wobei N eine ganze Zahl größer oder gleich zwei ist,
- Steuermittel (121) der ersten Schaltzellen (112), **dadurch gekennzeichnet, dass** es unter anderem aufweist: für die oder jede Phase der Ausgangsspannung:
- N-1 Kondensatorpaare (116), wobei jedes Kondensatorpaar (116) zwischen einen Zwischenpunkt (114) von einem der beiden Schaltzweige (110) und einen Zwischenpunkt (114) vom anderen der beiden Schaltzweige (110) zwischengeschaltet ist, wobei die beiden Kondensatoren (116) jedes Paares miteinander über zweite Mittelpunkte (118) verbunden sind,
- N zweite Schaltzellen (120), wobei eine unter den N zweiten Schaltzellen (120) zwischen den Ausgangsanschluss (108) und einen ersten zweiten Mittelpunkt (118) geschaltet ist, und jede der N-1 anderen zweiten Zellen (120) zwischen zwei Mittelpunkte (118, 106) geschaltet ist, und
- Steuermittel (121) der zweiten Schaltzellen (120),
und **dadurch gekennzeichnet, dass** die Steuermittel (121) dazu geeignet sind, das Schalten der entsprechenden ersten und zweiten Zellen (112, 120) gemäß einem Steuergesetz zu steuern, wobei das Steuergesetz derart ist, dass der Strom für wenigstens einen vorgegebenen Wert von +Udc/4 und -Udc/4 der Ausgangswechselspannung über einem zugeordneten Kondensator (116) während einer ersten Phase in eine Richtung und dann während einer zweiten Phase in die andere Richtung fließt.

2. System (100) nach Anspruch 1, bei dem jede erste Schaltzelle (112) wenigstens einen ersten Schalter (122) aufweist, der für den Strom bidirektional ist.

3. System (100) nach Anspruch 2, bei dem die ersten Schalter (122) der beiden Schaltzweige (110) in Reihe und in derselben Richtung zwischen die beiden Eingangsanschlüsse (102) geschaltet sind.

4. System (100) nach Anspruch 2 oder 3, bei dem jeder erste Schalter einen Transistor (126) und eine Diode (128) aufweist, die antiparallel zum Transistor (126) geschaltet ist.

5. System (100) nach einen der vorhergehenden Ansprüche, bei dem jede zweite Schaltzelle (120) für den Strom und die Spannung bidirektional ist.

6. System (100) nach Anspruch 5, bei dem jede zweite Schaltzelle (120) zumindest zwei zweite Schalter (124) aufweist, die antiseriell geschaltet sind.

7. System (100) nach Anspruch 6, bei dem jeder zweite Schalter (124) einen Transistor (130) und eine Diode (132) aufweist, die antiparallel zum Transistor (130) geschaltet ist.

8. System (100) nach Anspruch 5, bei dem jede zweite Schaltzelle (120) zwei zweite antiparallel geschaltete Schalter aufweist.

9. System (100) nach Anspruch 8, bei dem jeder zweite Schalter zumindest eine Diode, einen in Reihe zur Diode geschalteten Transistor und eine weitere zum Transistor antiparallel geschaltete Diode aufweist.

## Claims

1. System (100) for converting a continuous input voltage into an alternating output voltage comprising at least one phase, comprising:
- two input terminals (102)
- two voltage generators (104) connected in series between the input terminals (102) and linked together by means of a first middle point (106),
for the or each output voltage phase:
+ an output terminal (108)
+ two switching branches (110) each connected between the output terminal (108) and a respective input terminal (102), each switching branch (110) comprising N first switching cells (112) connected in series and N-1 intermediate point(s) (114), the first switching cells (112) being linked together successively via a corresponding intermediate point (114), N being a number greater than or equal to 2,
- control means (121) for the first switching cells (112),
**characterized in that** it also comprises
for the or each output voltage phase:
+ N-1 pair(s) of condensers (116), each pair of condensers (116) being connected between an intermediate point (114) of one of the two switching branches (110) and an intermediate point (114) of the other of the two switching branches (110), the two condensers (116) of each pair being linked together by second middle points (118),
+ N second switching cells (120), one of the N second cells (120) being connected between the output terminal (108) and a first second middle point (118), and each of the N-1 other second cell(s) (120) being connected between two middle points (118, 106), and
- control means (121) for the second switching cells (120),
and **in that** the control means (121) are adapted to control the switching of the corresponding first and second cells (112, 120) following a control law, and wherein the control law is such that the current circulates, for at least a given value between +Udc/4 and -Udc/4 of the alternating output voltage, through a corresponding condenser (116) in one direction during a first phase then in the other direction during a second phase.

2. System (100) according to claim 1, wherein each first switching cell (112) comprises at least one first breaker switch (122) which is bidirectional in current.

3. System (100) according to claim 2, wherein the first breaker switches (122) of the two switching branches (110) are connected in series and in the same direction between the two input terminals (102).

4. System (100) according to claim 2 or 3, wherein each first breaker switch comprises a transistor (126) and a diode (128) connected in anti-parallel to the transistor (126).

5. System (100) according to any of the preceding claims, wherein each second switching cell (120) is bidirectional in current and voltage.

6. System (100) according to claim 5, wherein each second switching cell (120) comprises at least two second breaker switches (124) connected in anti-series.

7. System (100) according to claim 6, wherein each second breaker switch (124) comprises a transistor (130) and a diode (132) connected in anti-parallel to the transistor (130).

8. System (100) according to claim 5, wherein each second switching cell (120) comprises two second breaker switches connected in anti-parallel.

9. System (100) according to claim 8, wherein each second breaker switch comprises at least a diode, a transistor connected in series with the diode and another diode connected in anti-parallel with the transistor.
